# EUROPEAN PATENT APPLICATION

(11) **EP 1 544 762 A1**
(43) Date of publication of application: **22.06.2005**
(21) Application number: 03029366.6
(22) Date of filing: 19.12.2003
(51) Int. Cl.: G06F 17/60

(54) **Method and apparatus for storing and managing contacts in a distributed collaboration system**

(71) Applicant: Groove Networks, Inc., Beverly, MA 01915 (US)
(72) Inventor: Evdokimov, Alexei, Swampscott, Massachusetts 01907 (US); Sarychev, Nikita V., Beverly, Massachusetts 01915 (US)
(74) Representative: Kindermann, Manfred

(57) **Abstract**

In a distributed collaboration system, each user stores all contact information in a local contact store. Each subsystem that maintains contact information, such as a shared space or contact list, and thus serves as a "source" for contact information would then store only information, such as a URL, that identifies a contact in the contact store. In order to insure that communications with a contact are not lost by a failure to receive contact communication information, the local contact stores are updated by means of bi-directional subscriptions. In particular, when information for a contact is added to a user's local contact store, a subscription message is sent to that contact. The subscription message contains the user's contact information and requests that the user be added to a subscription list for the contact. Updated contact information is automatically sent to each person on the subscription list.

## Description

### FIELD OF THE INVENTION

This invention relates to distributed and peer-to-peer collaboration systems and to method and apparatus for storing and managing contact information in such systems.

### BACKGROUND OF THE INVENTION

Collaboration involves the ability for each member in a group of members, called "collaborators" to automatically transmit information to, and receive information from, other collaborators in the group. In order to facilitate such collaboration, various systems have been developed that allow such information to be transmitted between personal computer systems, communication appliances or other communication devices, including handheld and wireless devices. Collectively, these devices will be referred to a "computers" in this description.

Computer-based collaboration may occur locally among users connected to, or operating with, one computer or server. Alternatively, collaboration may occur over a network, such as the Internet, wherein each of the users is located at a computer connected to the network. A server may also be connected to the network. Several collaboration models are currently being implemented as networked computer collaboration systems. One of these models is a client-server model in which all collaborators are connected, via the network, to a central server. Information generated by each collaborator is sent over the network to the server that then broadcasts the information back over the network to each other collaborator. In one version of this system data that is being collaboratively modified may be stored centrally on the server. Then, each collaborator that wants to modify the data sends a command to the server to effect a change in the server data. The server modifies its copy of the data and then sends information representing a "view" of the modified data to all collaborators, so that each collaborator can display the data locally.

Alternatively, in a server based system, in addition to the data copy maintained in the server, additional local data copies may be maintained in each collaborating computer. Each collaborator that wants to modify the data sends a command to the server to effect a change in the server data. The server modifies its copy of the data and then broadcasts the command to all collaborators. Each collaborator uses the command to update its local data copy. This local data copy is then displayed locally. Examples of this model are Lotus Notes® and Lotus Sametime™ sold by International Business Machines, Inc. Armonk, New York and Exchange sold by Microsoft Corporation, Redmond, Washington.

Another collaboration model is a "peer-to-peer" model in which direct connections are established over the network between each of the collaborating computers. Information generated by each collaborator is then sent directly to each other collaborator. In such a system, the collaborators communicate in a private "virtual" shared space that is generated and maintained by the collaborative system. When a collaborator joins the collaboration, the attributes and information of the shared space is "serialized" and then sent over the network to the new collaborator. When the information arrives it is "de-serialized" and used to create the shared space on the new collaborator's computer.

A central data repository is not necessary in a peer-to-peer collaboration system because each collaborator has a local copy of the data being collaboratively modified. In order to change the data, a collaborator generates a data change request or "delta" that is forwarded to each other collaborator. The incoming data change requests are then used by each collaborator to modify its local data copy. An example of this type of collaboration system is the Groove Workspace collaboration system developed and marketed by Groove Networks, Inc., 100 Cummings Center Suite 535Q, Beverly, MA 019015 that is described in detail at http://www.groove.net. See also U.S. Patent No. 6,446,113 B1.

For user convenience, all of the aforementioned collaboration systems have provisions to store contact information. Contacts are people with which the user shares a common interest and thus needs to communicate and can be business colleagues, associates, friends, and family. Stored contact information generally contains information necessary to communicate with a contact by various means, such as telephone and e-mail. This stored information relieves the user from remembering the information or retrieving the information from other sources and increases the speed and conveniences of the collaborative system.

The information stored for each contact generally includes visible information that contact has decided to share with other contacts, for example by means of a "vCard" or other dissemination mechanism. However, contact information may also include non-visible information such as device information regarding devices on which the contact may be reached, relay server information, authentication or verification information, such as digital signatures, digital fingerprints, or encryption keys to enable secure communication with the contact.

Typically, contact information is maintained in contact directories or contact lists that can be searched to locate the information. Contact lists can be referenced and maintained by many subsystems. For example, contact lists can be referenced by identities, contact list tools, the shared space member subsystem and the message store. All of these lists are stored in separate locations and maintained by different subsystems. Because there are so many different lists and thus so many "sources" of contact information, it is difficult to distribute updates and maintain all of the contact information current.

For example, changes in contact information in a shared space must be propagated by "contact changed" deltas sent to each member of the shared space. If the user participates in many shared spaces, processing these deltas in all of the shared spaces can be a time-consuming process. Further, if the user and the same contact participate in many shared spaces together, that contact will receive identical updates of the user's contact information from each of shared spaces.

Similarly, instant messenger contact information may only be updated when the user sends that contact an instant message. Therefore, a user is not guaranteed to have the most recent version of information for a given contact. Not only user visible information may be out of date, but also the non-visible list of client devices or relays may change, making future communication impossible without updating the contact information.

### SUMMARY OF THE INVENTION

In accordance with the principles of the invention, each user stores all contact information in a local contact store in order to provide a single location for all contact information for that user. Each subsystem that maintains contact information, such as a shared space or contact list, and thus serves as a "source" for contact information would then store only information, such as a URL, that identifies a contact in the contact store. Therefore, it will only be necessary to update information in the contact store in order to keep the contact information current.

In order to insure that communications with a contact are not lost by a failure to receive contact communication information, local contact stores are updated by means of bi-directional subscriptions using identity messages. In particular, when information for a contact is added to a user's local contact store, a subscription request message is sent to that contact. The subscription request message contains the user's contact information and requests that the user be added to a subscription list for the contact. Later, if the contact updates his or her contact information, the updated information is automatically sent to each person on the subscription list. In order for the user to receive these future updates, the contact must maintain current contact information for the user. Thus, the subscription must be "bi-directional" requiring that the user add that contact to the user's own subscription list so that the contact will automatically receive all user updates.

In one embodiment, the contact may deny the request for a user to be added to his or her subscription list. In this case, the user does not add that contact to the user's own subscription list.

In another embodiment, even if the recipient of a subscription request message does not have any sources that would require that the requestor's contact information be present in the recipient's contact store, the contact information in the request is added to the contact store as a "source-less" contact but is added solely to implement the bi-directional subscription.

In still another embodiment, a list is maintained of sources of information for a contact in the contact store. When a new source requests that contact information be added to a contact store (for example, a user joins a shared space that has the contact as a member), the information is not added to the contact store if the contact information already exists in the contact store. Instead, the information in the contact store may be updated (if the information from the new source is more recent than the information in the contact store) and the contact source is added to the list. Similarly, when a contact source is deleted (for example when a user leaves a shared space that has the contact as a member) the contact source is removed from the list, but the contact information is not removed from the contact store. When the list is empty, the contact becomes a source-less contact.

In yet another embodiment, in order to prevent information for inactive source-less contacts from accumulating in the contact store, each source-less contact is contacted periodically and their contact information is removed from the contact store if they do not respond within a given time period.

In another embodiment, a subscription request may include only the contact name and not full "vCard" information. In this case, a "name-only" flag is set in the vCard information so that only selected information is sent to that subscriber during contact information updates.

### BRIEF DESCRIPTION OF THE DRAWINGS

The above and further advantages of the invention may be better understood by referring to the following description in conjunction with the accompanying drawings in which:

Figure 1A is a block schematic diagram of a prior art distributed collaboration system.

Figure 1B is a more detailed block diagram of a system database in one of the collaborator computers in Figure 1A.

Figure 2 is a still more detailed block diagram of an account store in the database shown in Figure 1B.

Figure 3 is a state diagram showing various states of contact device records in a subscription list and transitions between states caused by various actions.

Figure 4 is a flowchart showing the steps in an illustrative process for adding contact information to a contact store.

Figure 5 is a flowchart showing the steps in an illustrative process for removing contact information from a contact store.

Figure 6 is a flowchart showing the steps in an illustrative process for updating contact information in a contact store.

Figure 7 is a flowchart showing the steps in an illustrative process for deleting a contact device from a subscription list.

Figure 8 is a flowchart illustrating the steps in an illustrative process for performing periodic checks to determine source-less contacts are still active.

Figures 9A and 9B, when placed together, form a flowchart showing the steps in an illustrative process for processing contact propagation messages received from a contact.

Figure 10 is a flowchart showing the steps in an illustrative subroutine for processing a Subscription Request message.

Figure 11 is a flowchart showing the steps in an illustrative subroutine for processing a Request Denied message.

Figure 12 is a flowchart showing the steps in an illustrative subroutine for processing a Sender has no sources message.

Figure 13 is a flowchart showing the steps in an illustrative subroutine for processing a Contact Updated message.

Figure 14 is a flowchart showing the steps in an illustrative subroutine for processing a Ping message.

Figure 15 is a flowchart showing the steps in an illustrative subroutine for processing a Pong message.

Figure 16 is a flowchart showing the steps in an illustrative subroutine for processing a Delete device message.

Figure 17 is a flowchart showing the steps in an illustrative process for processing contact store entries when an account has been imported to a device.

Figures 18A and 18B, when placed together, show a flowchart for an illustrative process that is performed when an account is deleted from a device.

### DETAILED DESCRIPTION

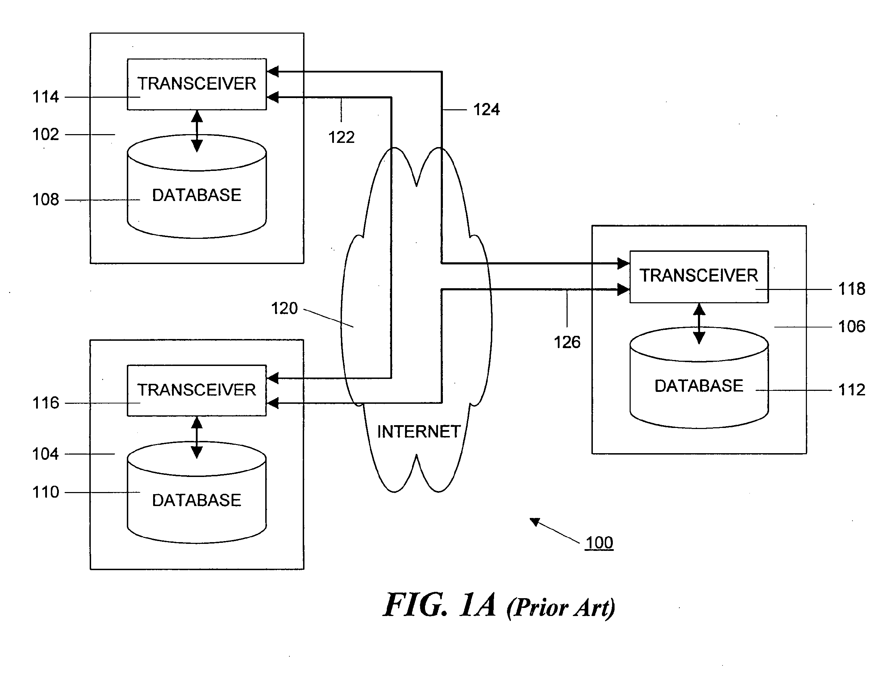

Figure 1A is a block schematic diagram of a collaborative system 100, such as the aforementioned Groove collaboration system. Figure 1A shows three collaborating devices 102, 104 and 106 that can be computers, PDAs, laptop computers, set top boxes, web-enabled cell phones or other communication devices. Although only three collaborating devices are shown, additional devices may also be present. When the Groove software is loaded onto such devices, it creates a database such as databases 108, 110 and 112 in devices 102, 104 and 106, respectively. These databases each hold a local copy of data that is being processed by the collaborators. As discussed below, the databases 108, 110 and 112 also hold information regarding the operation of each of the collaborating devices 102, 104 and 106.

The collaborative software also creates a transceiver, such as transceivers 114, 116 and 118 in the devices 102, 104 and 106, respectively. Each transceiver is responsible for generating and sending data change requests, called "deltas", between collaborators as indicated schematically by arrows 122, 124 and 126. Typically, these data change requests are sent over the Internet 120 as shown in Figure 1A, but they could also be sent over another network such as a LAN network. The data change requests are used for a number of purposes such as adding and removing collaborators from the system and updating the local data copies in each collaborating device in order to keep the data copies in synchronization.

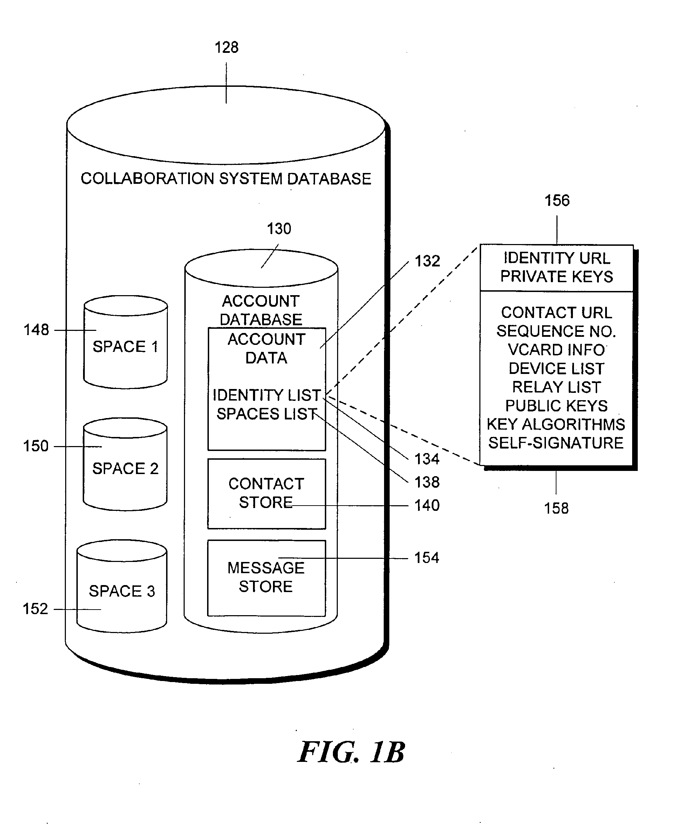

In order to use the aforementioned collaborative software, a user establishes one or more accounts. In general, an account corresponds to user information files commonly found in other systems, such as identity files, etc. Each account includes information about the user such as e-mail addresses and other ways to contact the user: The account information is encrypted, signed and stored in a database, such as databases 108, 110 or 112, that are protected by passwords and maintained by the collaborative system. Such a database 128 is illustrated in more detail in Figure 1B.

In particular, the system database 128 includes an account database 130 that, in turn, stores certain user-private data about the account, For example, a user may have multiple identities, such as a professional identity for use in the office and a personal identity for use with family and friends for purposes like sharing pictures or vacation plans. The account data includes a list 134 of these identities and data for each identity, a list of shared spaces associated with the account. The account database also includes a separate data store, of which data stores 148, 150 and 152 are shown, associated with each shared space in which the user is a member. Data stores 148, 150 and 152 include the local data copy associated with the shared space and may include other information relating to that shared space. The account database 130 further includes a contact store 140 that stores contact information for each identity in the account and contact information for other contacts. Finally, the account database includes other information, such as a message store 154 that stores instant messages and invitations.

The data for each identity includes a private part 156 that is never publicly available and a public part 158, the contact information, that is publicly available. The private portion 156 includes, among other information, a URL that uniquely identifies that identity and private encryption and signature keys of public/private key pairs used by the identity to encrypt and sign messages. The public contact information 158 includes, among other things, a contact URL that uniquely identifies the contact and is generally the same as the identity URL for that identity. The contact information also includes a sequence number for the contact. The sequence number is an integer number that is set to zero when the contact is created. The contact sequence number is incremented by a predetermined large number (for example one thousand) whenever a new device is added to the contact information. The contact sequence number is incremented by a predetermined small number (for example, one) whenever the contact information is changed for any other reason (for example, the contact's vCard information is updated). Note, that only an identity that "owns" contact information can update that information, since all contact information is signed with the private key of the identity. Further, contact information can only be updated on one of the account's devices.

The contact information further includes the contact's vCard information (name, personal and business data, including phone numbers, fax numbers, email addresses, etc.). The vCard information may also have a "name-only" bit for vCards that only include the contact's name. The contact information further includes a list of devices on which the identity that "owns" the contact information exists, a list of relay devices that are typically servers and security data. The security data can include the public keys of the aforementioned public/private key pairs, key algorithms and self-signature information.

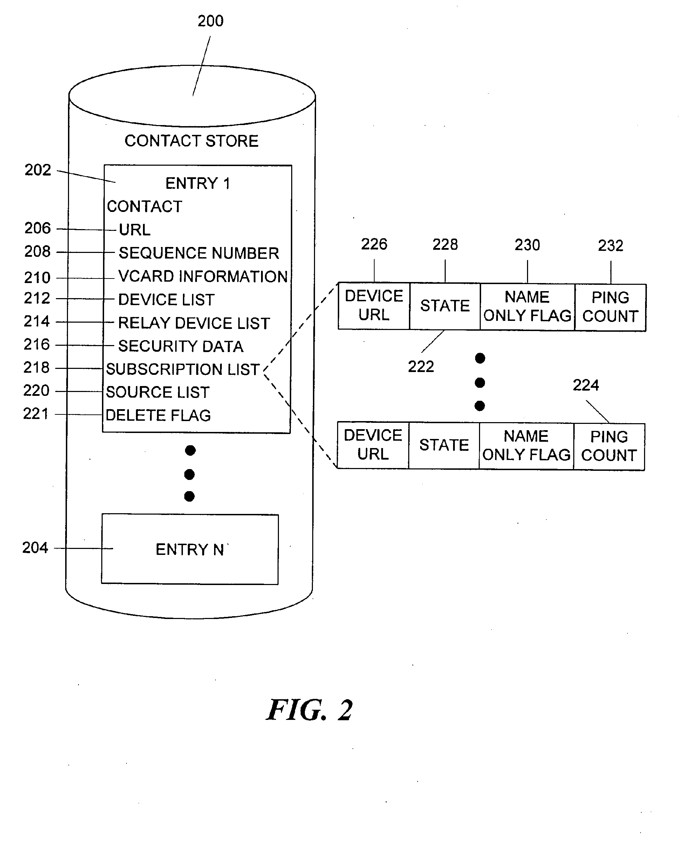

In accordance with the principles of the invention, all contact information, including the contact information for the identities associated with the account, is stored in a contact store that is shown in more detail in Figure 2.

In particular, the contact store 200 has a set of contact store entries of which entry 1 (202) and entry N (204) are shown. Those skilled in the art would understand that the contact store could include one or more entries. Each contact store entry, such as entry 202 includes, among other things, contact information that, in turn, includes the contact URL 206, the contact sequence number 208, the contact's vCard information 210, the list of devices 212 on which the identity that "owns" the contact information exists, the list of relay devices 214 and the public security data 216. The contact store entry also includes a list of sources 220, which is a list of URLs identifying "owners" of the contact information in that entry. Sources are added to the source list 220 when a new source for the contact information is added and removed from the list 220 when a source for that contact information is removed. A delete flag 221 in the contact store entry allows the contact information to be marked for deletion as discussed below.

In accordance with the principles of the invention, a contact store entry that corresponds to an identity in the account (for example, contact store entry 202) also includes a subscription list 218 that is discussed in more detail below. The subscription list 218 comprises a contact URL that identifies the subscribing contact and information for each device of the contact that has subscribed to the contact information in the contact store entry. As will be discussed, list 218 is used to send contact information updates to each device of a contact on the list when the contact information in that entry changes. The devices on the list will include all devices (except relay devices) of a contact that has subscribed to the contact information. The subscription list 218 includes a list of subscription devices that includes an entry for each subscription device, of which entries 222 and 224 are shown, for each device that has subscribed to the contact information in the contact store entry. The entry for each subscription device has a device URL 226 that uniquely identifies the device, a device state field 228, a NameOnly flag 230 indicating whether this device should receive a name-only version of the contact information associated with an identity and a PingCount field 232. These fields are described below.

The device state field 228 in a subscription device entry holds a device state number that identifies one of six states in which the subscription device resides. The six device states and their definitions are as follows:

| State | Definition |
|---|---|
| 1 | One or more identities in the current account has sources of contact |
| | information for the contact, and that contact has sources of contact |
| | information for one or more of the identities in the current account. |
| 2 | One or more identities in the current account has sources of contact |
| | information for the contact, but that contact does not have sources of |
| | contact information for any identities in the current account. |
| 3 | None of the identities in the current account have sources of contact |
| | information for the contact, but that contact has sources of contact |
| | information for one or more identities in the current account. |
| 4 | None of the identities in the current account have sources of contact |
| | information for the contact, and that contact does not have sources of |
| | contact information for any identities in the current account. |
| 5 | One or more identities in the current account have sources of contact |
| | information for the contact, but that contact has denied a request for |
| | subscription to its contact information. |
| 6 | None of the identities in the current account have sources of contact |
| | information for the contact, and that contact has denied a request for |
| | subscription to its contact information. |

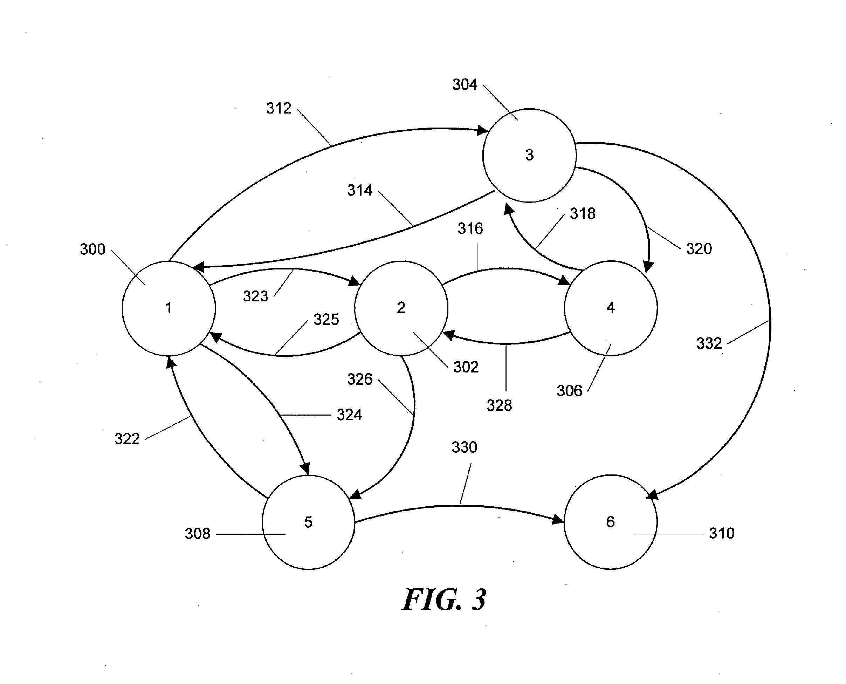

The six contact device states 300-310 are shown in Figure 3. Figure 3 also illustrates state transitions caused by contact propagation messages that are received by a user. State transitions and contact propagation messages are discussed in more detail below.

In a preferred embodiment, the account and contact stores are implemented as XML documents that are stored in an encrypted XML object store such as database 200. An illustrative form for these XML documents is shown below.

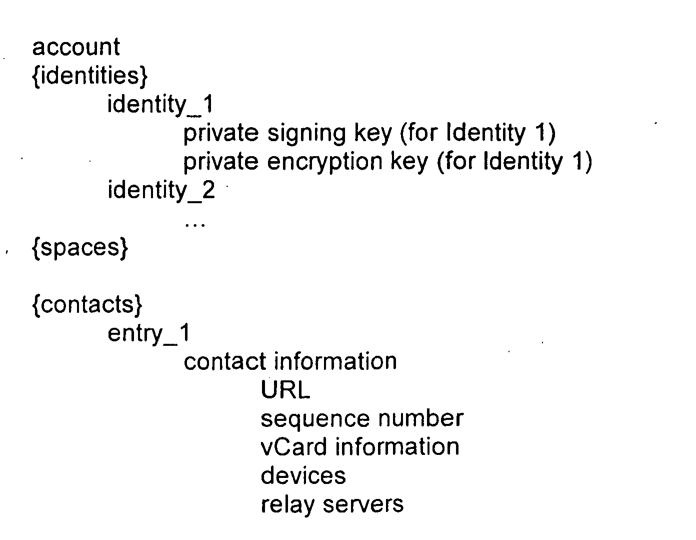

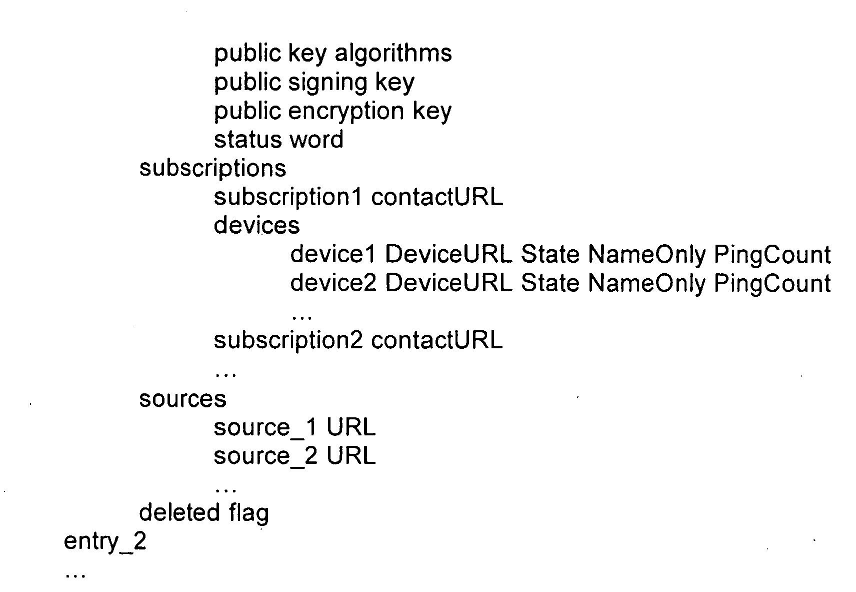

Contact store 200 provides a centralized (per-account) storage for all the contacts associated with the account and thus significantly reduces amount of space that copies of contacts consume in various places, such as personal contact lists, message stores, etc. In addition, contact store 200 provides a single point for updating any contact information. Further contact store 200 allows the clients of the contact store to associate arbitrary data with any contact in a contact store. Changes to that data can be optionally disseminated to all of the account devices. This arbitrary data might be used to add comments to contacts or to prevent contact spoofing.

Contact store 200 is not an engine, but is a local storage that can be maintained by another engine, such as the account or shared space member engines, in order to disseminate changes to any data associated with a contact to all of the devices associated with the account. The dissemination will be performed by obtaining a property list stored in the account store and associated with a contact in the contact store. This property list would be provided by a property list provider for that contact. For example, the account engine could be such a provider. Thus, the storage of contact information is local, but associated data can be transparently disseminated across all of the account devices.

In accordance with the principles of the invention, all engines that formerly maintained a copy of contact information in their data stores (for example, message stores and member managers) are modified to store the contact URL instead of the full contact information in their data stores. Although the data store contains only a URL, whenever data produced by an engine is being serialized as part of shared space serialization for dissemination to other shared space members, the contact URLs in the data are used to retrieve the actual contact information from the contact store and that contact information is included in the serialized data. Conversely, whenever data received from another shared space member is being de-serialized as part of the shared space de-serialization, contact information in the de-serialized data is added to the contact store, and only the associated contact URLs are stored in the shared space data store.

As previously mentioned, the contact store can be maintained by an existing engine such as the account engine or the shared space member engine. This engine has an ability to update a contact in response to messages received from other users. These messages include the following message types:

Subscription Request message - This message type requests that the sender be added to the recipient subscription list in order to automatically receive updates of the recipient's identity contact information. The Subscription Request message includes either full vCard information for the recipient or a "name-only" vCard for the recipient. In either case, for security purposes, the message contains sufficient information, such as a digital signature, in order for the recipient to verify and authenticate the sender.

Request Denial message - This message is returned to the sender of a Subscription Request message when the recipient of the Subscription Request message denies the request for updates. Subscription requests can be denied by means of a user interface screen that sets permissions.

Sender has no sources for contact message - This message is sent to each device on a subscription list when contact information for a subscriber is removed from a contact store and indicates that the sender has no remaining sources of contact information for that subscriber.

Contact was updated message - This message is send to all contacts on a subscription list when an identity's contact information changes and causes the recipient to update their contact information for the sender. This message contains the self-signature of the sender and, during such an update, for security purposes, the message processing engine detects whether the self-signature verifies. If the self-signature does not verify, the contact information is discarded and an error is generated.

The "Contact was updated" message also includes vCard information of the sender. If the NameOnly bit for a contact on the subscription list is set, then the vCard information includes only the sender name and sufficient information to communicate with the contact for updating purposes. The NameOnly bit will be set in a subscription list if the Subscription Request message that places the contact on the subscription list includes a name only vCard. If later the message sender communicates with the recipient, may receive the sender's full vCard information, but in order to change the subscription list entry from NameOnly vCard information to full vCard information, the recipient must send a new Subscription Request message containing full vCard information. Although changing the LAN/directory publishing mode to "name only" does not affect users who already have full vCard information, it will be necessary to re-subscribe on every contact update if the update is not the result of notification message.

Delete device message - This message is sent to all subscription devices on a subscription list when the identity associated with the contact store entry of which the subscription list is a part is permanently disabled or its device is deleted. A recipient of this message will delete sender's device from its subscription lists regardless of the previous subscription state.

Ping message - This message is used to determine whether the recipient is still valid. In order to avoid storing contact information in the contact store for source-less contacts that are no longer valid, the contact store periodically sends each source-less contact on a subscription list a Ping message. If there is no response to a predetermined number of Ping messages, then that source-less contact is marked for deletion. In this respect, contact information in the contact store that corresponds to subscriber devices in the subscription list with states 4 and 6 will be deleted. Similarly, contact information corresponding to subscribers with no devices will be marked for deletion by setting the delete flag 221. When contact information is marked for deletion, an assumption will be made that the subscriber device is in state 4.

Pong message - This message is sent to the sender of a Ping message by the recipient of that message to indicate the recipient is still active.

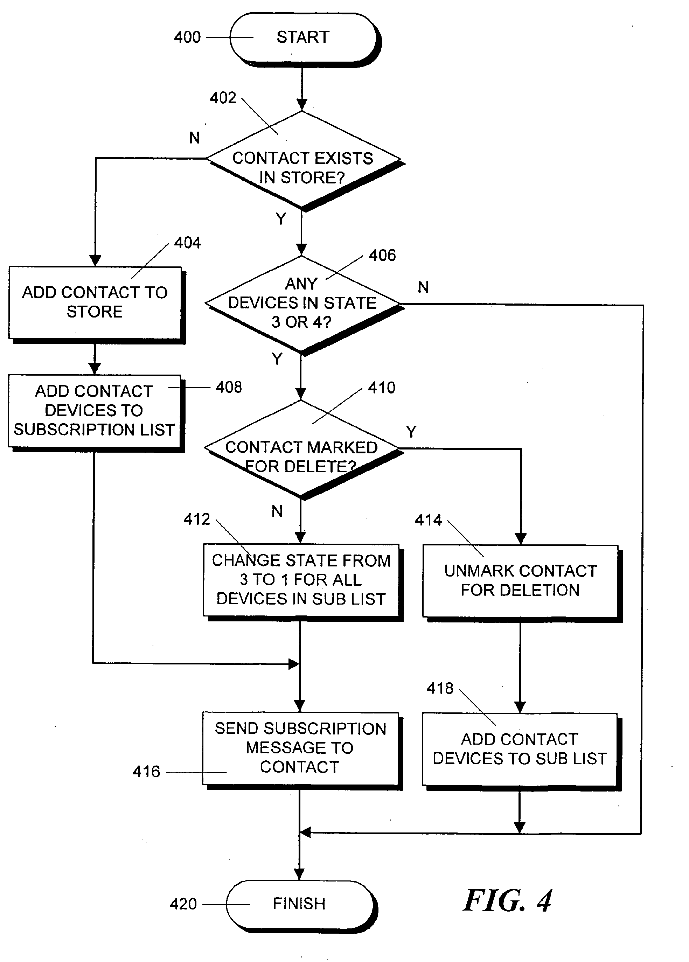

The processing that is performed by the contact store in order to maintain the contact information is discussed in detail in connection with Figures 4-15. Figure 4 shows the steps in an illustrative procedure that adds a new contact source to the contact store of an identity. This process is performed when the contact source is not internal and the contact information is not owned by one of the identities in the current account. The process begins in step 400 and proceeds to step 402 where a determination is made whether the contact source already exists in the contact store. If the contact is not already in the contact store, the process proceeds to step 404 where the contact information is added to the contact store.

Then, in step 408, all devices associated with the contact are added to the subscription lists associated with all of the identity's account identities. The value of the state variable for each added device is set to state 2. Next, in step 416, a Subscription Request message is sent by the identity to each of the devices of the contact whose information is being added to the contact store so that the identity will be added to the subscription list of the contact, thereby making the subscription bi-directional. The process then finishes in step 420.

Alternatively, if in step 402, it is determined that information for the contact exists in the contact store, then the process proceeds to step 406 in which a determination is made whether any of the contact devices in the identity's subscription list is in state 3 or state 4. If no devices are in either state 3 or state 4, the process ends in step 420. However, if it is determined in step 406, that one or more devices is in either state 3 or state 4, then the process proceeds to step 410 where a determination is made whether the contact record has been marked for deletion by examining the delete flag. If the contact record has been marked for deletion, then, in step 414, the contact record is unmarked for deletion (by resetting the delete flag) and, in step 418, all of the devices associated with the contact information are added to the identity's subscription list with the value of the state variable set to state 2. This action corresponds to the state transition 328 between state 306 and state 302 as shown in Figure 3. The process then finishes in step 420.

Alternatively, if in step 410, it is determined that the contact record has not been marked for deletion, then the value of the state variable of each device in the identity's subscription list is changed from state 3 to state 1. This action corresponds to the state transition 314 between state 300 and state 304 as shown in Figure 3. Then, in step 416, a Subscription Request message is sent by the identity to each of the devices of the contact whose information is being added to the contact store so that the identity will be added to the subscription list of the contact, thereby making the subscription bi-directional. The process then finishes in step 420.

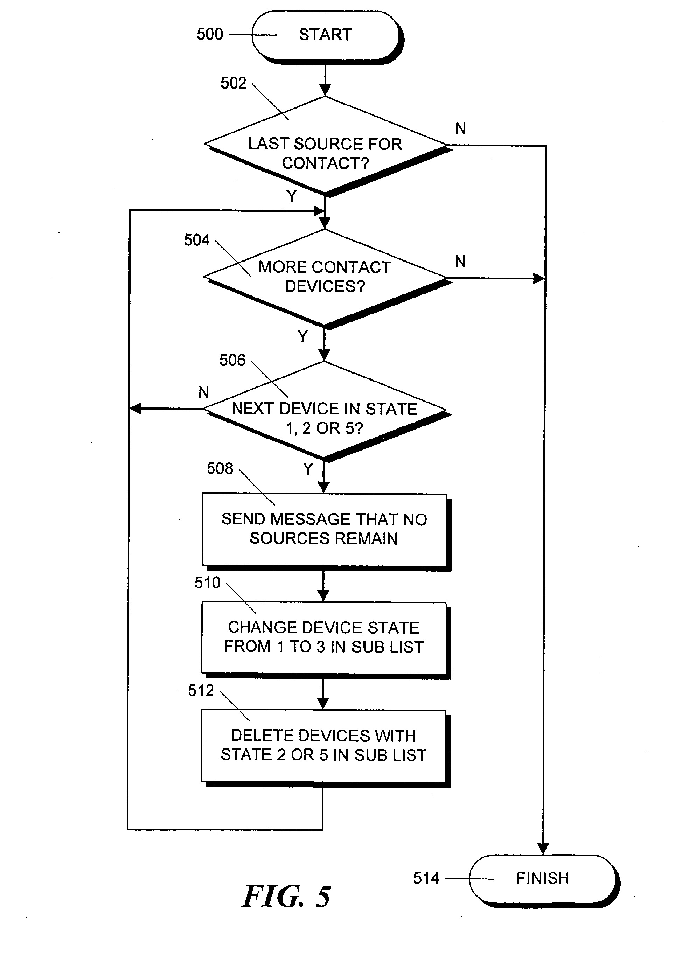

Figure 5 shows an illustrative process performed by the contact store when a contact source is removed from the contact store. This process is performed when the contact source is not internal and the contact information is not one of the identities in the current account and begins in step 500 and proceeds to step 502 where a determination is made whether the contact information to be removed was the last source for this contact information in the contact store. If the contact information is not the last source, then the process finishes in step 514. Alternatively, if the contact information is the last source, then the process proceeds to step 504 where a determination is made whether all contact devices have been processed. If all devices have been processed, then the process ends in step 514.

Alternatively, if in step 504 it is determined that not all contact devices have been processed, then, in step 506, a check is made whether the value of the state variable associated with the next device indicates that the device is in state 1 or state 2. If the device is not in state 1 or state 2, then the process returns to step 504 where a determination is made whether additional devices remain to be processed.

If the next device is in state 1 or state 2, as determined in step 506, then the process proceeds to step 508 where the "Sender has no sources for contact" message is sent to the contact associated with the device. This message indicates that the contact has become source-less in the identity's contact store. When the identity's contact information becomes source-less in the recipient contact's contact store, both parties can remove the others name from their subscription lists and mark the other's contact as deleted in the contact store.

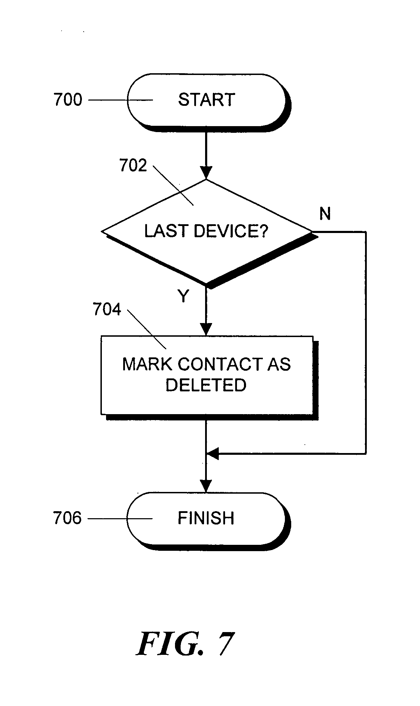

Next, in step 510, for all devices in state 1, the value of the state variable associated with the device is changed from 1 to 3 in the subscription lists in all account identities. This action corresponds to the state transition 312 from state 300 to state 304 in Figure 3. Then, in step 512, all devices in state 2 are deleted from the identity's subscription list. This action corresponds to the state transition 316 from state 302 to state 306 in Figure 3. In addition, all devices in state 5 are deleted from the identity's subscription list. This action corresponds to the state transition 330 from state 308 to state 310 in Figure 3. The process then finishes in step 514. Note that when each device is deleted, the process shown in Figure 7 and discussed below is performed.

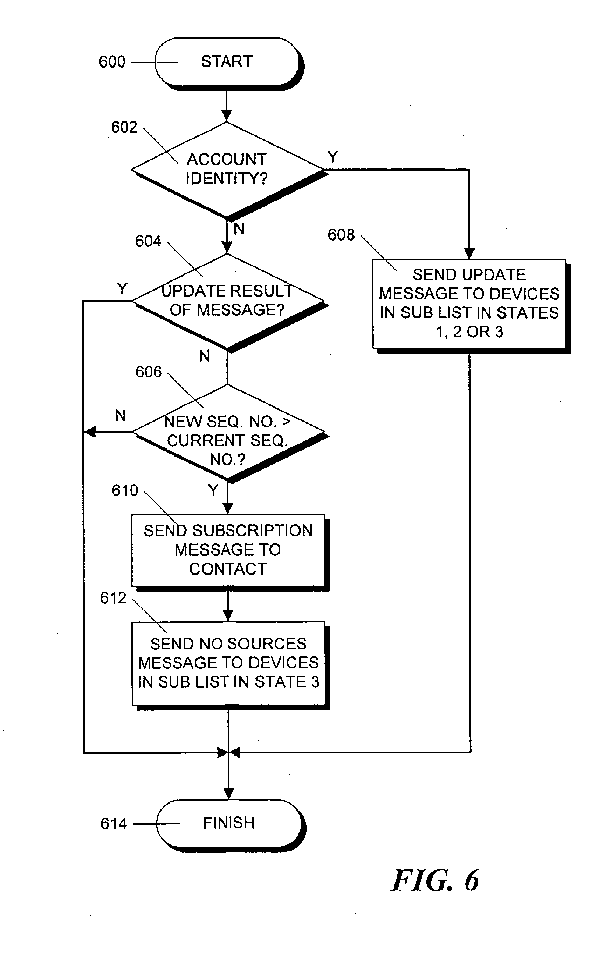

Figure 6 shows an illustrative process performed by the contact store that notifies all subscribers when information in a contact store is updated. This process begins in step 600 and proceeds to step 602 where a determination is made if the contact information being updated is owned by one of the identities in the current account. If the update is being made to such contact information, then in step 608, the "Contact was updated" message is sent to all of devices in states 1, 2 or 3 in the account subscription list. This notifies each subscribed that their contact information must be updated.

Alternatively, if in step 602, a determination is made that the contact information changes are being made to contact information that is not owned by an identity, then the process proceeds to step 604 where a determination is made if the update resulted from a "Contact update" message received from another contact. If the update is the result of such an update message, then the process finishes in step 614.

If the update is not the result of an incoming update message, then, in step 606, a check is made to determine whether the new contact sequence number is greater than current sequence number stored with the contact record in the contact store (or when the new contact sequence number is equal to the current sequence number and the stored contacts are different). If the new sequence number is not greater than the current sequence number or the stored contacts are different, then the process finishes in step 614. However, if the new sequence number is greater than the current sequence number and the stored contacts are the same, then, in step 610, a Subscription Request message is sent to the contact requesting updates of the contact information. In step 612, a "Sender has no sources for contact" message is sent to all devices in the subscription list for the contact that are in state 3. The process then finishes in step 614.

Figure 7 shows an illustrative process performed by the contact store when a contact device is deleted from a subscription list. This process begins in step 700 and proceeds to step 702 where it is determined whether the deleted device was the last device associated with the contact and contact is now source-less. If so, the process proceeds to step 704 where the associated contact is marked for deletion and the process finishes in step 706. Alternatively, if the deleted device is not the last device associated with the contact, then the process proceeds from step 702 directly to finish in step 706.

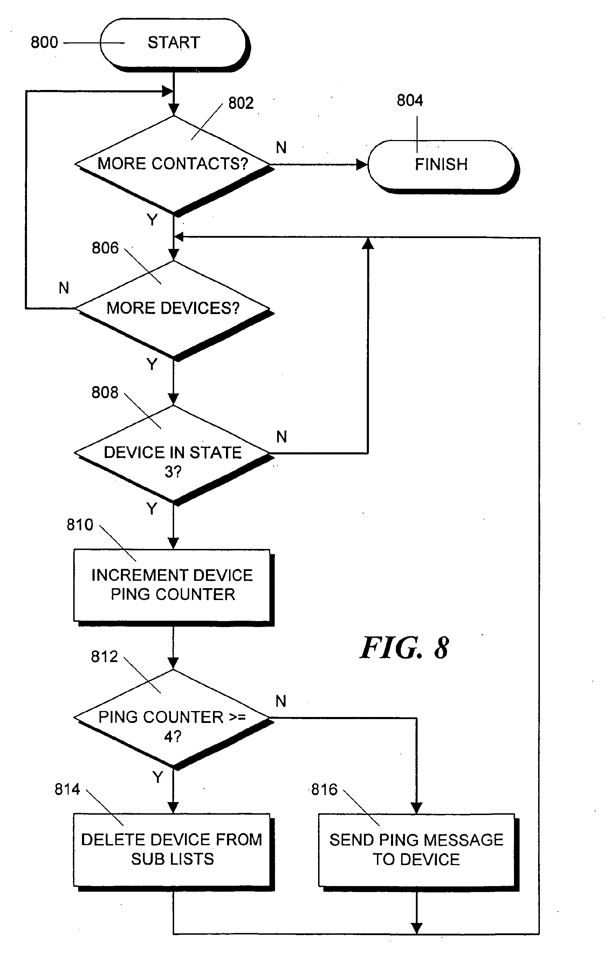

Figure 8 shows an illustrative process performed by the contact store periodically, for example, a week after the last time, in order to eliminate source-less contacts that are no longer active. This process begins in step 800 and proceeds to step 802 where each contact in the contact store is examined. If all contacts have been processed, then the process ends in step 804. Alternatively, if further contacts remain to be processed, then the process proceeds to step 806 where, for a given contact, all devices associated with that contact in the subscription list are examined. If, in step 806, no more devices in the subscription list remain to be processed, then all devices in the subscription list and associated with a contact have been processed and the process returns to step 802 where a check is made to determine if more contacts remain to be processed.

If in step 806, it is determined that further devices remain to be processed, then the process proceeds to step 808 in which the next device state is checked. If the next device is not in state 3 as indicated by the value of the state variable associated with that device, then the process returns to step 806 where a check is made to determine whether further devices remain to be processed. Alternatively, if, in step 808, it is determined that the device being examined is in state 3, then the process proceeds to step 810 where the PingCount variable associated with the device is incremented. Then, in step 812, a determination is made whether the value of the incremented PingCount variable is greater than a predetermined limit, for example, 4. If the value of the PingCount variable is less than or equal to the predetermined limit, then in step 816, a Ping message is sent to the device. If the device is active, upon receiving the Ping message it will return a Pong message. The process then returns to step 806 to determine if additional contacts must be processed.

However, if, in step 812, the PingCount variable value has exceeded the predetermined limit, then in step 814, the device is deleted from the subscription lists in all of the account identities. The process then returns to step 806 to determine whether additional contacts remain to be processed.

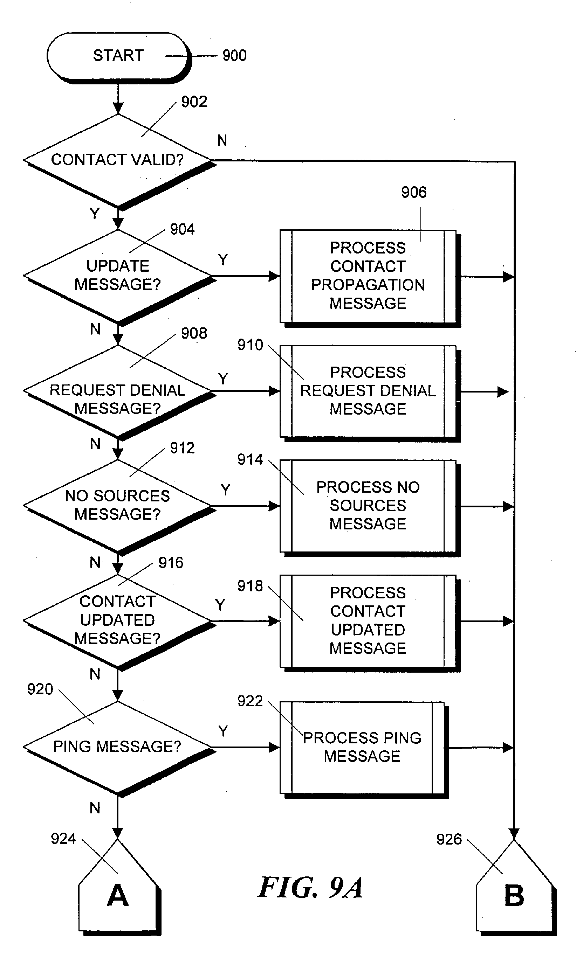

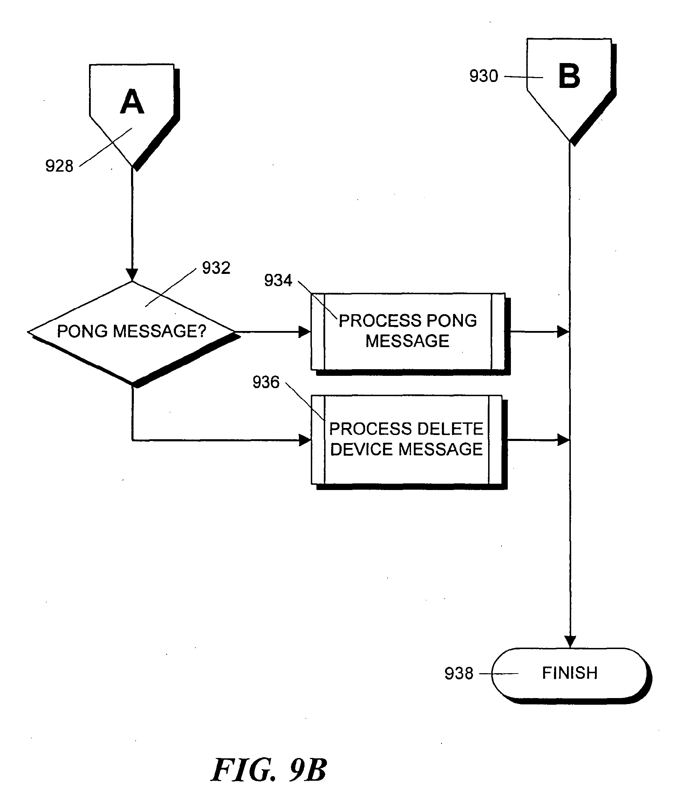

Figures 9A and 9B, when placed together, show an illustrative process performed by the contact store to process messages received from other contacts. The first step in this process is to determine what type of message has been received. This first step is illustrated in Figures 9A and 9B. The process begins in step 900 and proceeds to step 902 where some initial checks are made to determine whether the message is a contact propagation message and to confirm that the sender's contact information validates successfully and that the sender's signature matches any signatures already on file for that sender. If these initial checks are not passed, then the process proceeds, via off-page connectors 926 and 930 to finish in step 938.

Alternatively, if in step 902, the initial checks are passed, then the message is examined to determine the type of message that has been received. A check is made in step 904 to determine whether the message is a Subscription Request message. If so, the process subscription request message routine 906 is run.

If the message is not a Subscription Request message, then the process proceeds to step 908 where a check is made to determine whether the message is a Request denial message. If so, the process request denial message routine 910 is run.

If the message is not a Request denial message, then the process proceeds to step 912 where a check is made to determine whether the message is a Sender has no sources for contact message. If so, the process no sources message routine 914 is run.

If the message is not a Sender has no sources for contact message, then the process proceeds to step 916 where a check is made to determine whether the message is a Contact Updated message. If so, the process contact updated message routine 918 is run.

If the message is not a Contact updated message, then the process proceeds to step 920 where a check is made to determine whether the message is a Ping message. If so, the process Ping message routine 922 is run.

When the message is not a Ping message, the process proceeds, via off-page connectors 924 and 928 to step 932 where a determination is made whether the message is a Pong message. If so, the process Pong message routine 934 is run.

Finally, when the message is not a Pong message, it must be a Delete device message and the process Delete device message routine 936 is run. In any case, the process ends in step 938.

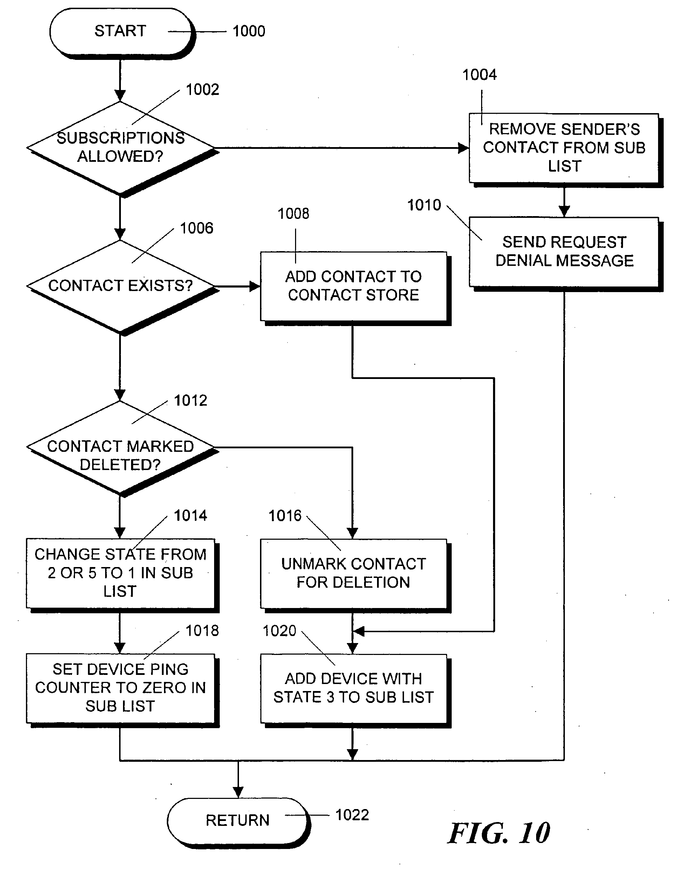

The process Subscription Request message subroutine 906 is shown in more detail in Figure 10. This process begins in step 1000 and proceeds to step 1002 where a check is made to determine whether subscriptions are allowed for the requestor. As previously mentioned, a user interface selection can be provided to permit an identity to set permissions regarding subscription updates to the owner's identity information. These permissions are then checked in step 1002 to determine whether the message sender has permission to subscribe to contact information updates.

If the permissions do not allow the sender to subscribe to updates, then, in step 1004, the sender's contact information is removed from the message recipient's contact store and, in step 1010, a Request denial message is sent to the message sender. The subroutine then returns in step 1022.

Alternatively, if the permissions do allow subscriptions as determined in step 1002, the process proceeds to step 1006 where a determination is made whether the sender's contact information exists in recipient's contact store. If the contact information is not in the contact store, then, in step 1008, the contact information is added to the contact store. The process then proceeds to step 1020 where the sender's device is added to recipient's subscription list with the state variable set to state 3. The subroutine then returns in step 1022.

If, in step 1006, it is determined that the contact information already exists in the recipient contact store, then, in step 1012, a check is made to determine whether the contact is marked for deletion. If so, in step 1016, the contact record is unmarked for deletion and the process proceeds to step 1020 where the sender's device is added to the recipient's subscription list with the value of the state variable set to state 3. The subroutine then returns in step 1022. This action corresponds to a transition 318 from state 4 (306) to state 3 (304) as shown in Figure 3.

Alternatively, if in step 1012 it is determined that the contact is not marked for deletion, then the process proceeds to step 1014 where the value of the state variable in the subscription list corresponding to the sender's contact device is changed from 2 to 1 or from 5 to 1 for all account identities. These actions correspond to transition 325 from state 302 to state 300 and transition 322 from state 308 to state 300, respectively. Next, in step 1018, the ping counter in the sender's device is set to zero in all account identities. The subroutine then returns in step 1022.

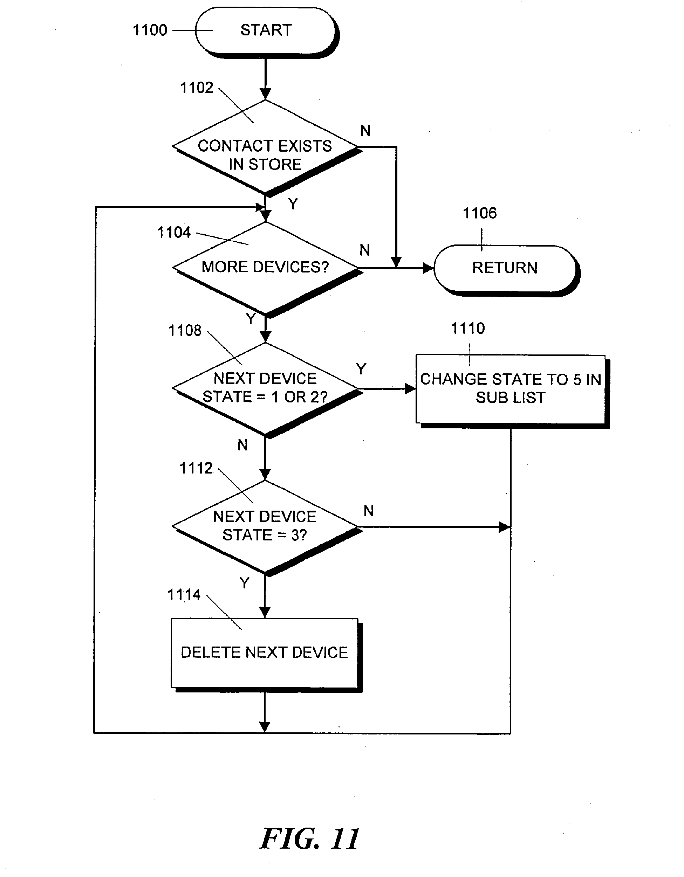

The process Request denial message subroutine 910 is shown in more detail in Figure 11. This process begins in step 1100 and proceeds to step 1102 where a determination is made whether the message sender's contact information exists in the recipient's contact store. If the information does not exist in the contact store, then the subroutine returns in step 1106.

Alternatively, if it is determined in step 1102 that the sender's contact information does exist in the contact store, then, all of the sender's devices are processed in each of the account identities. First, in step 1104, a check is made to determine whether any more device records for the sender remain to be processed. If device records remain to be processed, then, in step 1108, a check is made to determine whether the value of the state variable in next device record to be processed is 1 or 2. If the value of the state variable is 1 or 2, then the process proceeds to step 1110 where the value of the state variable is changed to 5 in the sender's device record in the recipient's subscription list for all account identities. This action corresponds to transition 324 from state 300 to state 308 and transition 326 from state 302 to state 308 in Figure 3.

Alternatively, if the value of the state variable in the sender's device record is not 1 or 2, then, in step 1112, a check is made to determine whether the value of the state variable is 3. If the value is not 3, the process returns to step 1104 to check if any further device records remain to be processed. However, if the value of the state variable is 3, then in step 1114, the device record is deleted in all account identities. This action corresponds to a transition 332 from state 304 to state 310 in Figure 3. The process then returns to step 1104 to determine if any further device records remain to be processed. If all records have been processed, then the subroutine returns in step 1106.

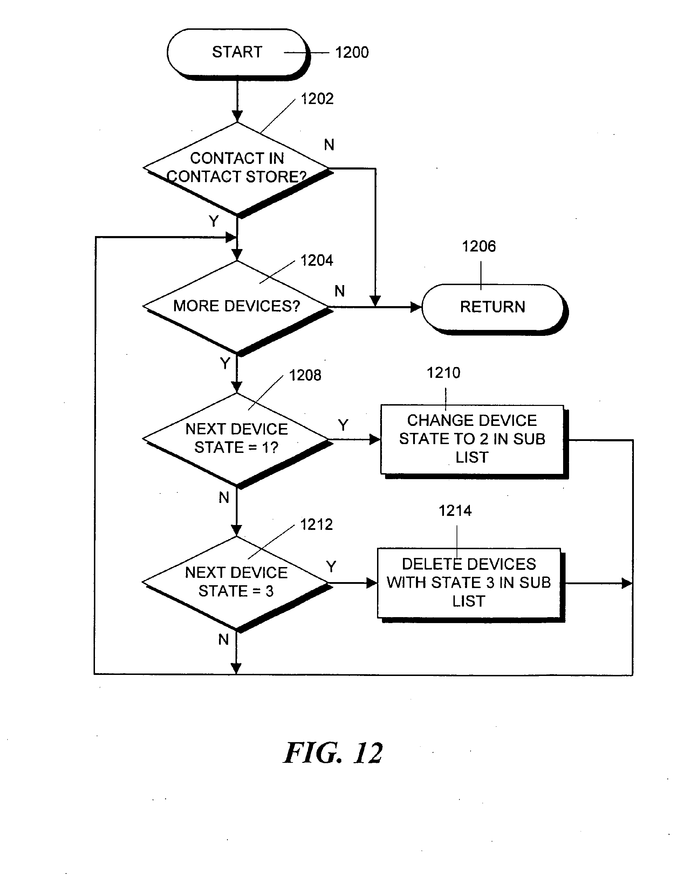

The process No sources message subroutine 914 is shown in more detail in Figure 12. This process begins in step 1200 and proceeds to step 1202 where a determination is made whether the message sender's contact information exists in the recipient's contact store. If the information does not exist in the contact store, then the subroutine returns in step 1206.

Alternatively, if it is determined in step 1202 that the sender's contact information does exist in the contact store, then, all of the sender's devices are processed in each of the account identities. First, in step 1204, a check is made to determine whether any more device records for the sender remain to be processed. If device records remain to be processed, then, in step 1208, a check is made to determine whether the value of the state variable in next device record to be processed is 1. If the value of the state variable is 1, then the process proceeds to step 1210 where the value of the state variable is changed to 2 in the sender's device record in the recipient's subscription list for all account identities. This action corresponds to transition 323 from state 300 to state 302 in Figure 3.

Alternatively, if the value of the state variable in the sender's device record is not 1, then, in step 1212, a check is made to determine whether the value of the state variable is 3. If the value is not 3, the process returns to step 1204 to check if any further device records remain to be processed. However, if the value of the state variable is 3, then in step 1214, the device record is deleted in all account identities. This action corresponds to a transition 320 from state 304 to state 306 in Figure 3. The process then returns to step 1204 to determine if any further device records remain to be processed. If all records have been processed, then the subroutine returns in step 1206.

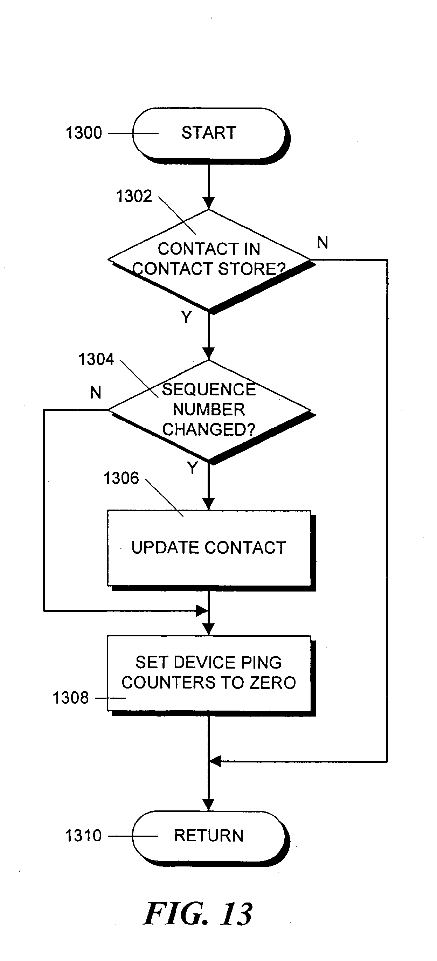

The process Contact Updated message subroutine 918 is shown in more detail in Figure 13. This process begins in step 1300 and proceeds to step 1302 where a determination is made whether the message sender's contact information exists in the recipient's contact store. If the information does not exist in the contact store, then the subroutine returns in step 1310.

Alternatively, if it is determined in step 1302 that the sender's contact information does exist in the contact store, then, in step 1304, a determination is made whether the sender's contact sequence number has changed. If the sequence number has changed, then, in step 1306, the sender's contact information in the recipients contact store is updated and the process proceeds to step 1308. However, if the sequence number has not changed, then the process proceeds directly to step 1308.

In step 1308, the ping counter is zeroed in the sender's device in the subscription list for all account identities. The subroutine then returns in step 1310.

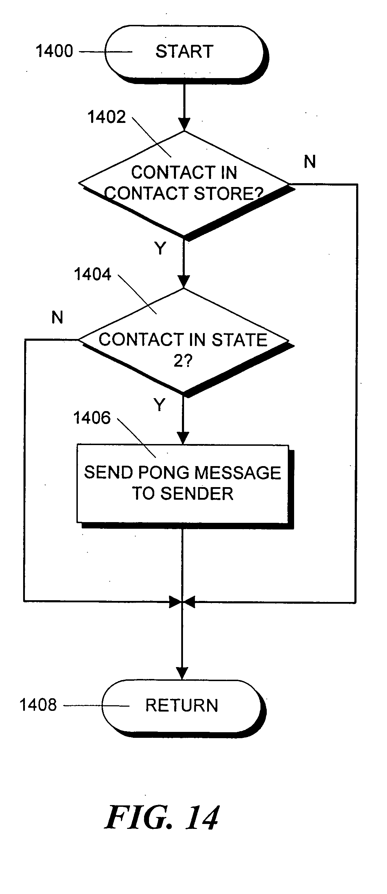

The process Ping message subroutine 922 is shown in more detail in Figure 14. This process begins in step 1400 and proceeds to step 1402 where a determination is made whether the message sender's contact information exists in the recipient's contact store. If the information does not exist in the contact store, then the subroutine returns in step 1408.

Alternatively, if it is determined in step 1302 that the sender's contact information does exist in the contact store, then, in step 1304, a determination is made whether the sender's device record had a vale 2 in its state variable. If the state variable has a value 2, then a Pong message is returned to the sender. If the device record is not in state 2, the subroutine returns in step 1408.

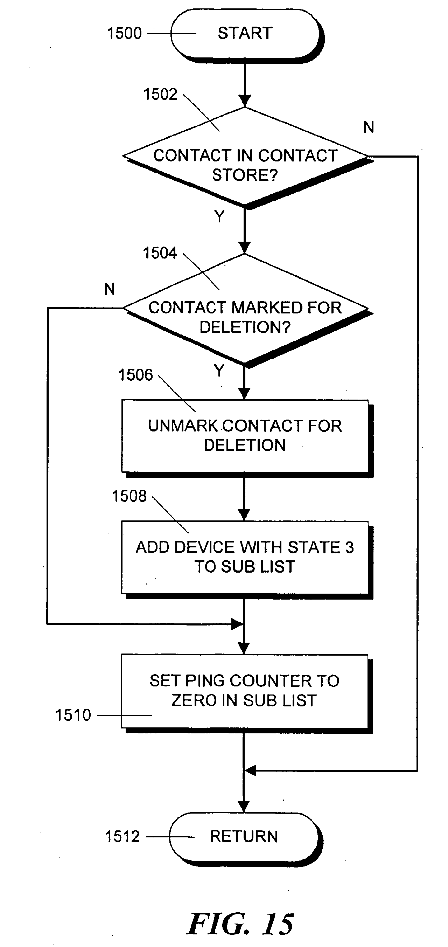

The process Pong message subroutine 924 is shown in more detail in Figure 15. This process begins in step 1500 and proceeds to step 1502 where a determination is made whether the message sender's contact information exists in the recipient's contact store. If the information does not exist in the contact store, then the subroutine returns in step 1512.

If the information does exist in the recipient's contact store, then, in step 1504, a check is made to determine whether the contact is marked for deletion. If so, in step 1506, the contact record is unmarked for deletion and the process proceeds to step 1508 where the sender's device is added to the recipient's subscription list for all account identities with the value of the state variable set to state 3. This action corresponds to a transition 318 from state 4 (306) to state 3 (304) as shown in Figure 3. Alternatively, if, in step 1510, it is determined that the contact was not marked for deletion, then the process proceeds directly to step 1510.

Next, in step 1510, the ping counter is zeroed in the sender's device record for all account identities. The subroutine then ends in step 1512.

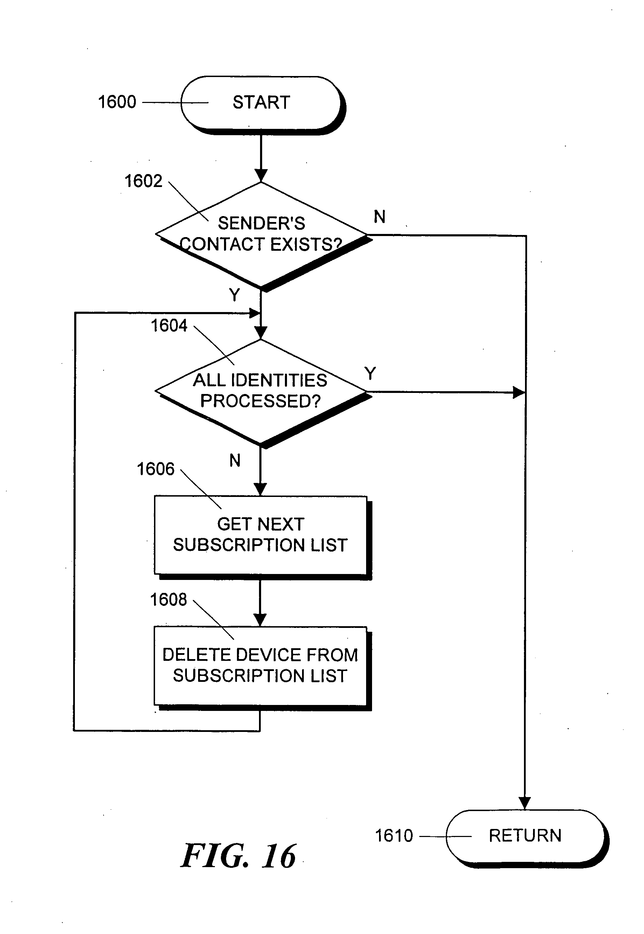

The process Delete device message subroutine 936 is shown in more detail in Figure 16. This process begins in step 1600 and proceeds to step 1602 where a determination is made whether the message sender's contact information exists in the recipient's contact store. If the information does not exist in the contact store, then the subroutine returns in step 1610.

Alternatively, if, in step 1602, it is determined that the sender's contact information exists in the contact store, then, in step 1604, a determination is made whether all identities in the current account have been processed. If so, the process ends in step 1610. If not, then, in step 1606, the subscription list associated with the message sender is obtained and, in step 1608, the device noted in the message is deleted from the subscription list. The process then returns to step 1604 to determine whether all identities have been processed. When all identities have been processed, the process ends in step 1610.

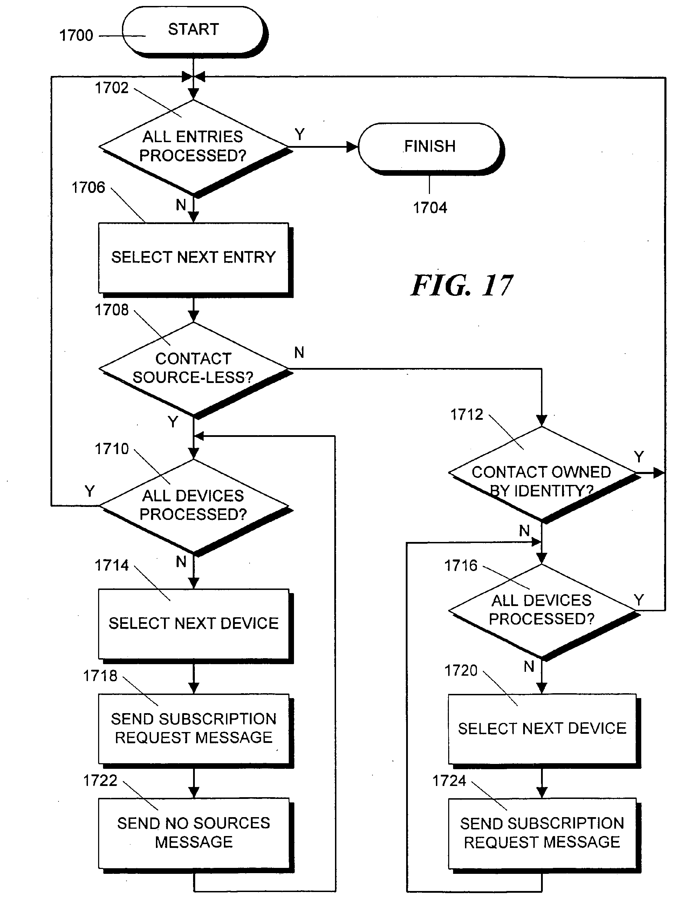

Two other processes are used to maintain the contact store. These processes occur when an account is imported to another device and when an account is deleted from a device. The first process is shown in Figure 17 and begins in step 1700 when an account is imported to another device. The process proceeds to step 1702 where all contact store entries are examined in the contact store for the account. If entries remain to be processed as determined in step 1702, then, in step 1706, the next entry is selected for processing. In step 1708, a determination is made whether the entry is for a source-less contact by examining the sources list in the entry. If the contact is source-less as determined in step 1708, all devices in the subscription lists for that contact are then processed. In particular, a determination is made in step 1710 whether all devices have been processed. If not, then, in step 1714, the next device is selected for processing. In step 1718, a "Subscription request" message is sent to the selected device. In step 1722, a "Sender has no sources for contact" message is sent to the selected device. The process then proceeds back to step 1710 to determine whether all devices have been processed. When all devices have been processed as determined in step 1710, the process returns to step 1702 to determine whether all contact store entries have been processed. When all entries have been processed as determined in step 1702, then the process ends in step 1704.

Returning to step 1708, if the contact is not source-less as determined in step 1708, then the process proceeds to step 1712 where a determination is made whether the entry is for a contact owned by an identity in the account. If the contact information is owned by an identity, the process proceeds back to step 1702 to determine whether all entries have been processed.

Alternatively, if, in step 1712, it is determined that the contact information is not owned by an identity, then all devices in the subscription lists for that contact are then processed. In particular, a determination is made in step 1716 whether all devices have been processed. If not, then, in step 1720, the next device is selected for processing. In step 1724, a "Subscription request" message is sent to the selected device. The process then proceeds back to step 1716 to determine whether all devices have been processed. When all devices have been processed as determined in step 1716, the process returns to step 1702 to determine whether all contact store entries have been processed.

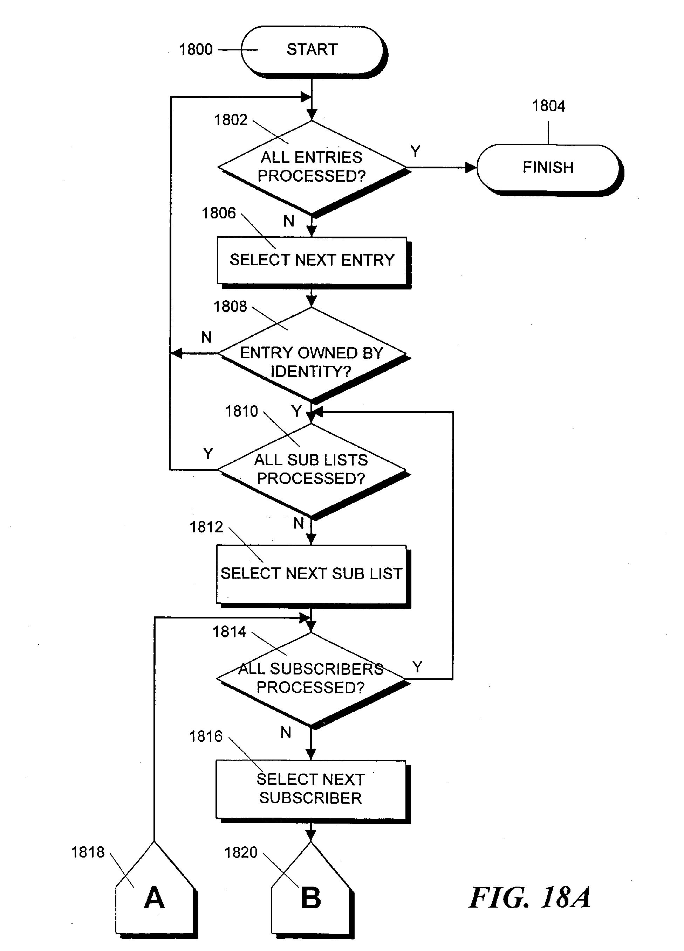

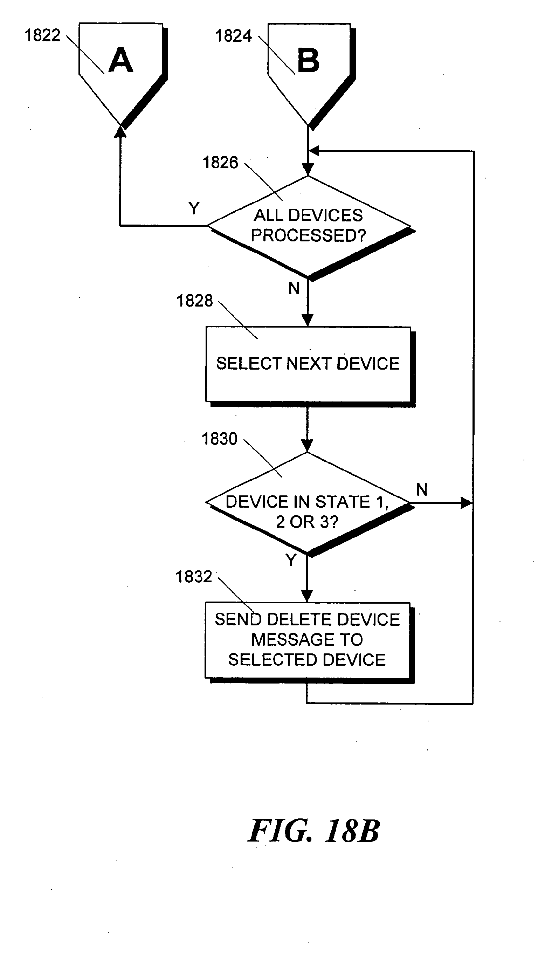

The process that is performed when an account is deleted from a device is shown in Figures 18A and 18B. This process starts in step 1800 and proceeds to step 1802 where a determination is made whether all entries in the contact store for the account have been processed. If not all entries have been processed, as determined in step 1802, then, in step 1806, the next unprocessed entry is selected. Then, in step 1808, a determination is made whether the entry is owned by one of the identities associated with the account. If not, the process returns to step 1802 to determine whether all entries have been processed. Alternatively, if, in step 1808, it is determined that the entry is owned by an identity, then, in step 1810 a determination is made whether all subscriber lists for that entry have been processed. If not all lists have been processed as determined in step 1810, then, in step 1812, the next unprocessed list is selected for processing.

Next, in step 1814, a determination is made whether all subscribers in the selected list have been processed. If not, the next unprocessed subscriber in the list is selected. The process then proceeds, via off-page connectors 1820 and 1824, to step 1826, where a determination is made whether all devices for the selected subscriber have been processed by examining the device list in the subscriber entry. If not, in step 1828, the next unprocessed device is selected. In step 1830, a determination is made whether the selected device is in states 1, 2 or 3. If not, the process returns to step 1826 to determine whether any further devices remain to be processed.

Alternatively, if in step 1830, it is determined that the selected device is in one of states 1, 2 or 3, then, in step 1832, a "Delete device" message is sent to the selected device. The process then returns to step 1826 to determine whether further devices remain to be processed. When all devices have been processed, as determined in step 1826, then the process returns, via off-page connectors 1822 and 1818 to step 1814 to determine whether any further subscribers on the selected list remain to be processed. When all subscribers have been processed, as determined in step 1814, the process returns to step 1810 to determine if any further subscription lists remain to be processed.

If all subscription lists have been processed as determined in step 1810, the process returns to step 1802 to determine whether any entries remain to be processed. If, in step 1802, it is determined that all entries have been processed, then the process ends in step 1804.

A software implementation of the above-described embodiment may comprise a series of computer instructions either fixed on a tangible medium, such as a computer readable media, for example, a diskette, a CD-ROM, a ROM memory, or a fixed disk, or transmittable to a computer system, via a modem or other interface device over a medium. The medium either can be a tangible medium, including but not limited to optical or analog communications lines, or may be implemented with wireless techniques, including but not limited to microwave, infrared or other transmission techniques. It may also be the Internet. The series of computer instructions embodies all or part of the functionality previously described herein with respect to the invention. Those skilled in the art will appreciate that such computer instructions can be written in a number of programming languages for use with many computer architectures or operating systems. Further, such instructions may be stored using any memory technology, present or future, including, but not limited to, semiconductor, magnetic, optical or other memory devices, or transmitted using any communications technology, present or future, including but not limited to optical, infrared, microwave, or other transmission technologies. It is contemplated that such a computer program product may be distributed as a removable media with accompanying printed or electronic documentation, e.g., shrink wrapped software, pre-loaded with a computer system, e.g., on system ROM or fixed disk, or distributed from a server or electronic bulletin board over a network, e.g., the Internet or World Wide Web.

Although an exemplary embodiment of the invention has been disclosed, it will be apparent to those skilled in the art that various changes and modifications can be made which will achieve some of the advantages of the invention without departing from the spirit and scope of the invention. For example, it will be obvious to those reasonably skilled in the art that, in other implementations, protocols and translations different from those shown may be performed. Other aspects, such as the specific process flow and the order of the illustrated steps, as well as other modifications to the inventive concept are intended to be covered by the appended claims.

## Claims

1. A method for storing and managing contact information in a distributed collaboration system having a plurality of collaborating computers connected by a network, each computer having a local data store and a plurality of locations that use contact information, the method comprising:
(a) when contact information for a contact is received at a collaborating computer, storing the contact information and a unique contact reference in a single contact store in the local data store associated with that collaborating computer; and
(b) placing the contact reference in each of the plurality of locations in place of the contact information.

2. The method of claim 1 further comprising:
(c) when contact information for a contact is received at a collaborating computer from a contact, sending that contact a message requesting updates to the contact information.

3. The method of claim 2 wherein each collaborating computer has at least one identity corresponding to a user of the collaborating computer and the method further comprises:
(d) placing contact information for the identity in the contact store.

4. The method of claim 3 wherein the message includes the contact information for the identity.

5. The method of claim 4 further comprising:
(e) upon receiving the message, the contact stores the contact information for the identity in a contact store in the local data store associated with a collaborating computer used by the contact.

6. The method of claim 5 further comprising:
(f) storing contact information in the contact store when the contact information is received from a first source;
(g) creating a list of sources of the contact information in the stored contact information;
(h) adding a source to the list of sources when the contact information is received at a collaborating computer from a second source different from the first source; and
(i) removing a source from the list of sources when a request to remove contact information from one of the first and second sources is received at the collaborating computer.

7. The method of claim 6 further comprising
(j) deleting the contact information from the contact store when the list of sources becomes empty and the contact information for the identity has been deleted from the contact store in the local data store associated with a collaborating computer used by the contact.

8. The method of claim 1 wherein each collaborating computer has at least one account area in the local data store associated therewith and step (a) comprises:
(a1) storing the contact information and a unique contact reference in the account area.

9. The method of claim 1 further comprising:
(c) updating and deleting the contact information in response to messages received from the collaborating computers.

10. The method of claim 9 wherein the contact information has a state associated therewith and wherein step (c) comprises changing the state in response to the messages.

11. Apparatus for storing and managing contact information in a distributed collaboration system having a plurality of collaborating computers connected by a network, each computer having a local data store and a plurality of locations that use contact information, the apparatus comprising
means operable when contact information for a contact is received at a collaborating computer for storing the contact information and a unique contact reference in a single contact store in the local data store associated with that collaborating computer; and
means for placing the contact reference in each of the plurality of locations in place of the contact information.

12. The apparatus of claim 11 further comprising:
means operable when contact information for a contact is received at a collaborating computer from a contact for sending that contact a message requesting updates to the contact information.

13. The apparatus of claim 12 wherein each collaborating computer has at least one identity corresponding to a user of the collaborating computer and the apparatus further comprises:
means for placing contact information for the identity in the contact store.

14. The apparatus of claim 13 wherein the message includes the contact information for the identity.

15. The apparatus of claim 14 further comprising:
means operable upon receiving the message in a collaborating computer used by the contact for storing the contact information for the identity in a contact store in the local data store associated with the collaborating computer used by the contact.

16. The apparatus of claim 15 further comprising:
means for storing contact information in the contact store when the contact information is received from a first source;
means for creating a list of sources of the contact information in the stored contact information;
means for adding a source to the list of sources when the contact information is received at a collaborating computer from a second source different from the first source; and
means for removing a source from the list of sources when a request to remove contact information from one of the first and second sources is received at the collaborating computer.

17. The apparatus of claim 16 further comprising:
means for deleting the contact information from the contact store when the list of sources becomes empty and the contact information for the identity has been deleted from the contact store in the local data store associated with a collaborating computer used by the contact.

18. The apparatus of claim 11 wherein each collaborating computer has at least one account area in the local data store associated therewith and the means for storing the contact information and a unique contact reference in a single contact store comprises means for storing the contact information and a unique contact reference in the account area.

19. The apparatus of claim 11 further comprising:
means for updating and deleting the contact information in response to messages received from the collaborating computers.

20. The apparatus of claim 19 wherein the contact information has a state associated therewith and wherein the means for updating and deleting the contact information comprises means for changing the state in response to the messages.
